# EUROPEAN PATENT SPECIFICATION

(11) **EP 2 613 381 B1**
(45) Date of publication and mention of the grant of the patent: **07.09.2016**
(21) Application number: 12150188.6
(22) Date of filing: 04.01.2012
(51) Int. Cl.: H01M 4/20, H01M 4/73, H01M 10/12, H01M 4/04, H01M 10/04, H01M 10/18, H01M 2/18

(54) **A method of manufacturing a bipolar cell and a bipolar battery**
Verfahren zur Herstellung einer bipolaren Zelle und bipolare Batterie
Procédé de fabrication de cellule bipolaire et batterie bipolaire

(43) Date of publication of application: 10.07.2013
(73) Proprietor: Centurion Bipolair B.V., 6045 JA Roermond (NL)
(72) Inventor: Saakes, Machiel, 7316 BC Apeldoorn (NL); ten Have, Petrus Theodorus Jacobus Henricus, 5912 SM Venlo (NL); Coopmans, Johannes Gerardus Jozef, 5928 RN Venlo (NL)
(74) Representative: De Vries & Metman

(56) References cited:
- EP-A2- 2 157 642
- DE-C1- 3 152 032
- US-A- 3 784 410
- US-A- 4 530 153
- US-A- 5 795 357

## Description

The present invention relates to a method of manufacturing a bipolar cell for a bipolar lead acid battery, comprising the steps of supplying a bipolar plate including porous structures at opposite sides thereof, and applying pastes of a positive active material and a negative active material into cavities of the respective porous structures.

Such a method is known in the art. A bipolar lead acid battery comprises a plurality of bipolar cells between which separators are disposed. A bipolar cell comprises a bipolar plate which includes an electrically conductive central substrate layer that is sandwiched between metal-containing layers. The layers may be foils which are laminated to each other. The opposite sides of the bipolar plate are provided with porous structures which are filled with pastes of a positive active material and a negative active material, respectively. A prior art method of manufacturing a bipolar cell is described in EP 2 157 642. The positive active material may contain lead oxide, whereas the negative active material may contain lead.

It is an object of the present invention to provide an improved method of manufacturing a bipolar cell according to claim 1.

This is achieved by the method according to the invention wherein the respective pastes are applied substantially simultaneously.

An advantage of the method according to the invention is that due to applying the pastes at opposite sides simultaneously deformation of the bipolar plate between the respective porous structures is minimized.

The respective pastes may be applied onto the bipolar plate at elevated pressure of at least 0.1 kg/cm².

Preferably, the porous structures are grids since these can be fixed to the bipolar plate relatively easy, whereas the contact surface between the bipolar plate and the respective pastes can be optimized. In practice the grids are made of plastic and attached to the bipolar plate before pasting. The grids may be made of a thermoplastic material such as polypropylene or polycarbonate and laminated to the bipolar plate, or the grids may be attached to the bipolar plate by moulding.

It is noted that applying a paste at relatively high pressure into the cavities of a grid at only one side of the bipolar plate could lead to undesired curved portions of the bipolar plate between grid bars. This effect also happens in alternative porous structures and can be minimized by double-sided pasting.

The pastes may be applied by nozzles, which may be arranged at opposite sides of the bipolar plate.

After applying the pastes, the resulting surfaces thereof may be levelled. This is advantageous in terms of optimal contact with an adjacent separator when the bipolar cells are assembled with separators to a bipolar battery.

The method may be performed by means of a continuous process in order to obtain a high manufacturing speed.

The pastes are be applied such that the pastes form a thin continuous layer on top of the respective porous structures. This is advantageous for a curing process afterwards. During the curing process the pastes are pressed against the bipolar plate so as to create a firm contact between the bipolar plate and the pastes. The pressure is often created by a heavy weight on the bipolar cell, for example a block of lead. If, for example in case of grids, insufficient paste or recessed paste surfaces are present between grid bars, the heavy weight does not or insufficiently press onto the paste between the grid bars. Therefore, it is desired to apply the pastes at least flush to the upper surfaces of the porous structures, or to apply the pastes such that they form thin continuous layers on top of the respective porous structures, for example layers of about 10 µm. In case of grids the pastes may form a layer on top of the grid bars.

The invention is also related to a method of manufacturing a bipolar battery, comprising the method of manufacturing a bipolar cell as described hereinbefore, wherein a plurality of resulting bipolar cells are stacked onto each other, wherein a separator for absorbing electrolyte is sandwiched between adjacent bipolar cells.

The invention is also related to an apparatus for manufacturing a bipolar lead acid battery by means of the method as described hereinbefore.

The invention will hereafter be elucidated with reference to drawings showing an embodiment of the invention very schematically.
Fig. 1 is a top view of an embodiment of an apparatus for manufacturing a bipolar cell by means of the method according to the invention.
Fig. 2 is a side view of the embodiment of Fig. 1.
Fig. 3 is an exploded, partly cut-away perspective view of a bipolar battery, which comprises bipolar cells that are made according to the invention.
Fig. 4 is a cross-sectional view of the embodiment of Fig. 3 in an assembled condition.
Fig. 5 is an enlarged view of a part of the assembled battery which is indicated by V in Fig. 4.
Figs. 6 and 7 are charts representing experimental results of two different samples of batteries.

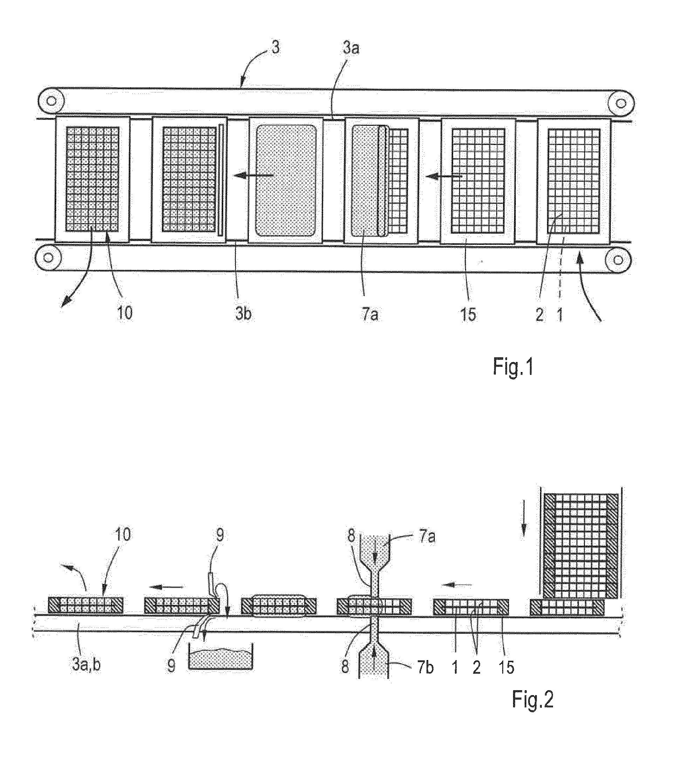

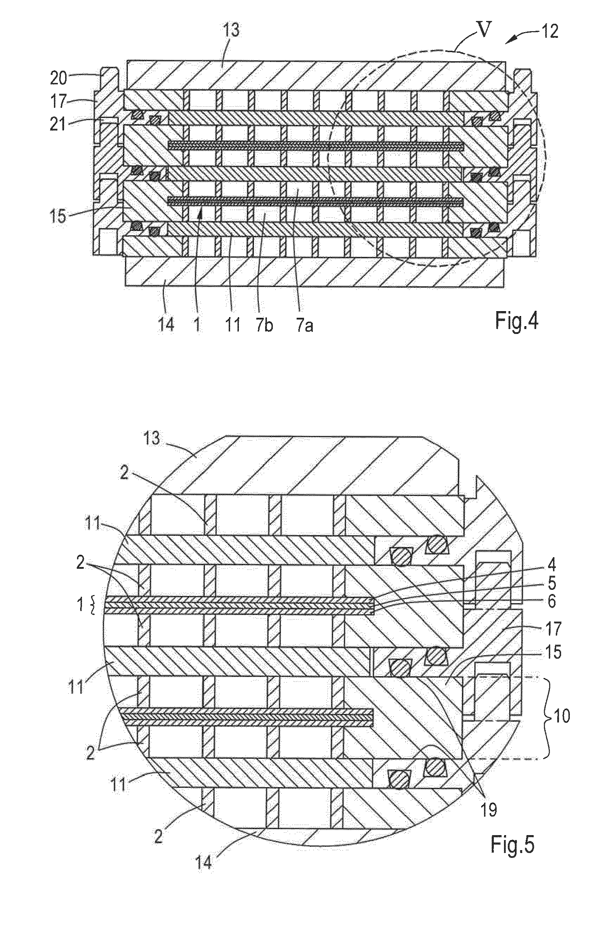

Figs. 1 and 2 show an illustration of an embodiment of an apparatus for manufacturing a bipolar cell. From the right side in Figs. 1 and 2 a bipolar plate 1 including grids 2 at opposite sides thereof is supplied by means of a conveyor 3. The bipolar plate 1 comprises a central substrate 4, for example a thermoplastic foil containing a conductive filler, which is sandwiched between metallic foils 5, 6, for example by laminating, see Fig. 5 which shows a part of an assembled bipolar battery in which a bipolar cell according to the invention is applied. The metallic foils 5, 6 may contain a lead tin alloy. The grids 2 are made of a thermoplastic material and are attached to the opposite sides of the bipolar plate 1, for example by means of laminating or injection moulding.

Referring to Figs. 1 and 2, a paste of a positive active material 7a is applied to the grid 2 at one side of the bipolar plate 1 and a paste of a negative active material 7b is applied to the grid 2 at the opposite side of the bipolar plate 1. According to the present invention the respective pastes 7a, 7b are applied simultaneously. It is noted that the outer sides of the bipolar plate 1 may be surface treated for better adherence of the respective positive and negative active materials 7a, 7b.

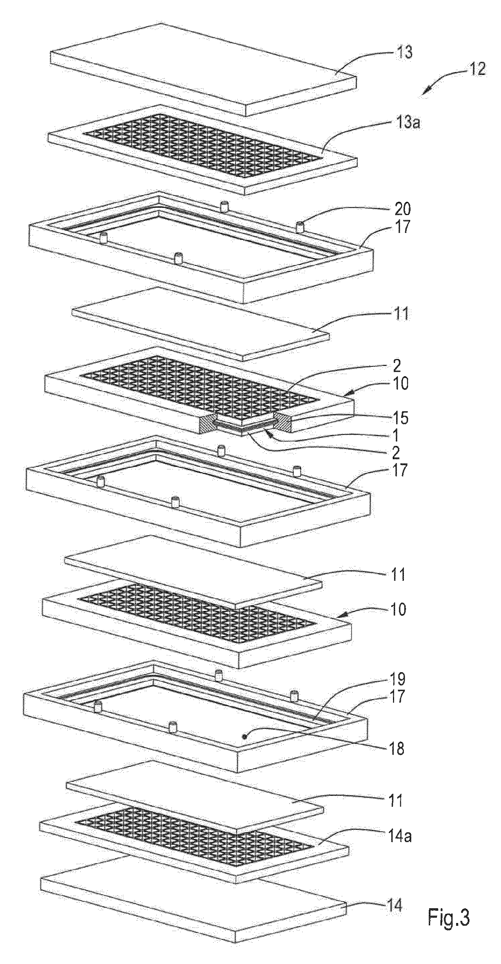

In the embodiment as illustrated in Fig. 1 the pastes 7a, 7b are applied by nozzles 8. As a result the cavities of the grids 2 are filled with the pastes. In a next step the resulting surfaces are smoothened by means of knives 9. The knives 9 remove excessive paste material from the grids 2. Preferably, the final opposite surfaces of a resulting bipolar cell 10 are rather smooth since this provides appropriate contact with an adjacent separator 11 when the bipolar cell 10 is assembled to form a bipolar battery 12, as shown in an disassembled condition in Fig. 3 and in a assembled condition in Figs. 4-5.

In order to allow pasting at both sides of the bipolar plates 1 at the same time, the conveyor 3 is provided with parallel conveyor belts 3a, 3b which support the bipolar plates 1 at edges thereof which are located outside the grids 2 and which can be left free of paste 7a, 7b. However, other types of conveyors are conceivable.

The applicant has found that applying the pastes 7a, 7b at elevated pressure improves performance and lifetime of the bipolar battery 12 in which bipolar cells 10 that are made according to the invention are applied. The elevated pressure may be at least 0.1 kg/cm², but is preferably higher than 0.3 kg/cm².

It is noted that pasting at elevated pressure is not necessarily related to pasting simultaneously at opposite sides of the bipolar plate 1. In general terms, the invention is also related to a method of manufacturing a bipolar cell for a bipolar lead acid battery comprising the steps of supplying a bipolar plate including porous structures at opposite sides thereof, and applying pastes of a positive active material and a negative active material into cavities of the respective porous structures, wherein at least one of the pastes is applied onto one side of the bipolar plate at elevated pressure of at least 0.1 kg/cm². Due to the elevated pressure a firm contact between the bipolar plate and the paste can be achieved.

After the process of pasting the resulting bipolar cells 10 are cured under elevated temperature, for example 40-80 °C during 6-24 hours. Curing may be performed before the bipolar cells 10 are assembled to form the battery 12, or when the battery is already in an assembled condition. In the latter case, it is possible to perform curing before or after compressing the battery 12.

Referring to Figs. 3-5 the bipolar battery 12 comprises a first terminal electrode 13 and a second terminal electrode 14. The terminal electrodes 13, 14 may be made of aluminium plates or alternative conductive materials. It is known that in bipolar batteries the electrical current is collected perpendicular to the plane of the terminal electrodes 13, 14.

In the embodiment as shown in Figs. 3-5 two bipolar cells 10 are disposed between the first and second terminal electrodes 13, 14. The bipolar cells 10 are depicted as units. The bipolar plate 1 extends beyond the peripheral edges of the grids 2. Furthermore, the bipolar cell 10 is provided with a cell edge 15 around the peripheral edges of the bipolar plate 1. This avoids a conductive bridge between the positive and negative electrodes or foils 5, 6 at the peripheral edges of the bipolar plate 1. The cell edge 15 is made of a non-conductive material, for example a polymer. During pasting the conveyor belts 3a, 3b may support the cell edges 15 which may already be fixed to the bipolar plates 1, as shown in Figs. 1 and 2.

Fig. 3 shows grid plates 13a, 14a which are adjacent to the first and second terminal electrodes 13, 14, respectively. In practice the grid plates 13a, 14a are provided with a paste of positive and negative active material, as well. In Fig. 3 the grid plates 13a, 14a are shown separately from the first and second terminal electrodes 13, 14, but they may be integrated.

The separators 11 are disposed between the neighbouring bipolar cells 10, between the first terminal electrode 13 and the neighbouring bipolar cell 10, and between the second terminal electrode 14 and the neighbouring bipolar cell 10. Under operating conditions of the battery 12 the separators 11 are filled with an electrolyte. It is clear that the cell edge 15 prevents the electrolyte from migrating from the separators 11 to the peripheral edges of the bipolar plate 1. In practice the separator 11 is made of a glass mat.

The battery 12 also comprises spacers 17 which have several functions. The spacer 17 comprises a frame member, which is preferably a rigid element. It has a central aperture 18 that defines a substantially rectangular opening through the frame member. The spacer 17 does not conduct electrical current and may be made of a polymer, for example polypropylene. An upper surface of the frame member is stepped down around the inner peripheral edge of the aperture 18. This defines a cell support 19 for supporting the bipolar cell 10. The frame member is partly mirror symmetrical such that also another cell support 19 is present at a lower surface thereof, see Fig. 5. The cell supports 19 project into the aperture 18 from the inner edge of the frame member. The spacer 17 is provided with interlocking members in the form of pins 20 and corresponding pin holes 21, in which the pins 20 fit. The pins 20 and pin holes 21 are located such that upon assembling the battery 12 the parts can be stacked in a simple manner.

Upon stacking the parts of the battery 12, the thickness of the separator 11 is larger than the distance between the opposite cell supports 19 of one spacer 17. Due to the compressibility of the separators 11 the stack can be compressed, for example to a pressure of 20 - 100 N/cm².

In order to illustrate the effect of pasting and/or curing at elevated pressure, similar experiments with two different battery samples were performed. A first sample of an assembled bipolar battery was compressed to a pressure of about 40 N/cm² and a second sample to a pressure of about 10 N/cm². Furthermore, in the second battery sample, small layer portions of the pastes of positive and negative active material were removed from cavities between grid bars of the bipolar cells in order to simulate a condition where pasting and/or curing at too low pressure is performed. In fact, in the second battery sample there are locations where contact between the pastes and the bipolar plate is poor. This is caused by the fact that paste was removed from the bipolar cell before curing under pressure. It is desired to cure the pasted bipolar cell under pressure, for example by means of putting a weight on the bipolar cell. However, when the paste surface between grid bars is recessed, the weight exerts a force onto the grid rather than on the paste.

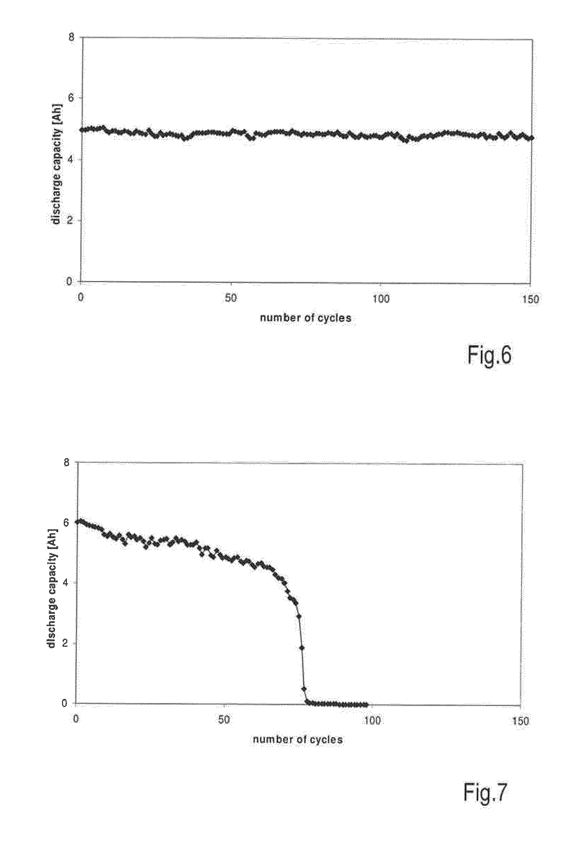

Test cycles with both battery samples have been performed in the following manner. First, the battery was charged at 2 A at a maximum voltage of 14.7 V. After the electrical current decreases below 2 A the battery was charged at 0.36 A without voltage cut-off. Discharging was performed at 2 A at a voltage cut-off at 10.2 V. Figs. 6 and 7 show the experimental results of the battery samples during a number of cycles of charging and discharging. The figures show the measured discharge capacity per cycle. It can be seen that the negative gradient of discharge capacity of the second battery sample, Fig. 7, is greater than that of the first battery sample, Fig. 6, which is caused by a lower compression force of the assembled second battery sample. However, the discharge capacity of the second battery sample also appears to decrease to zero suddenly after about 75 cycles. This is caused by poor contacts between the active material and the bipolar plate, more particular between the positive active material and the bipolar plate. This effect also occurs in case of pasting and/or curing at a too low pasting pressure. Due to the poor contacts the internal resistance increases dramatically and it becomes impossible to charge the battery.

From the foregoing it will be clear that the method of manufacturing a bipolar cell according to the invention provides the opportunity to make a reliable bipolar battery.

The invention is not limited to the embodiment illustrated in the drawings and described hereinbefore, which may be varied in different manners within the scope of the claims. For example, it is possible that the method is performed by means of a discontinuous process. Furthermore, the pastes can be applied at elevated pressure by means of rollers or other pressing means. It is noted that curing of pasted bipolar cells may be performed at elevated pressure at both sides thereof simultaneously.

## Claims

1. A method of manufacturing a bipolar cell (10) for a bipolar lead acid battery (12) by supplying a bipolar plate (1), wherein a positive active material and a negative active material are applied at opposite sides thereof substantially simultaneously, **characterized in that** the bipolar plate (1) includes porous structures (2) at opposite sides thereof, wherein pastes (7a, 7b) of a positive active material and a negative active material are applied into cavities of the respective porous structures (2), wherein the pastes (7a, 7b) form a continuous layer on top of the respective porous structures (2), which is thinner than 20% of the thickness of the porous structures (2).

2. A method according to claim 1, wherein the respective pastes (7a, 7b) are applied onto the bipolar plate (1) at elevated pressure of at least 0.1 kg/cm², and preferably at least 0.3 kg/cm².

3. A method according to claim 1 or 2, wherein the porous structures are grids (2).

4. A method according to one of the preceding claims, wherein the pastes (7a, 7b) are applied by nozzles (8).

5. A method according to one of the preceding claims, wherein after applying the pastes (7a, 7b), the resulting surfaces thereof are leveled.

6. A method according to one of the preceding claims, wherein the method is performed by means of a continuous process.

7. A method according to one of the preceding claims, wherein the pastes (7a, 7b) are cured at 40-80 °C during 6-24 hours.

8. A method of manufacturing a bipolar battery (12), comprising the method of manufacturing a bipolar cell (10) according to one of the preceding claims, wherein a plurality of resulting bipolar cells (10) are stacked onto each other, wherein a separator (11) for absorbing electrolyte is sandwiched between adjacent bipolar cells (10).

9. A method according to claim 8, depending on claim 7, wherein curing takes place after stacking, preferably after increasing compression force of the battery (12).

## Patentansprüche

1. Verfahren zum Herstellen einer bipolaren Zelle (10) für eine bipolare Bleibatterie (12) mittels Bereitstellens einer Bipolarplatte (1),
wobei ein positives aktives Material und ein negatives aktives Material im Wesentlichen gleichzeitig auf gegenüberliegenden Seiten davon aufgetragen werden,
**dadurch charakterisiert,**
dass die Bipolarplatte (1) Poren-Strukturen (2) an einander gegenüberliegenden Seiten davon aufweist,
wobei Pasten (7a, 7b) eines positiven aktiven Materials und eines negativen aktiven Materials in Hohlräume der jeweiligen Poren-Strukturen (2) eingebracht werden,
wobei die Pasten (7a, 7b) oben auf den jeweiligen Poren-Strukturen (2) eine kontinuierliche Schicht bilden, die dünner ist als 20 % der Dicke der Poren-Strukturen (2).

2. Verfahren gemäß Anspruch 1,
wobei die jeweiligen Pasten (7a, 7b) bei erhöhtem Druck von mindestens 0,1 kg/cm² und vorzugsweise von mindestens 0,3 kg/cm² auf die Bipolarplatte (1) aufgebracht werden.

3. Verfahren gemäß Anspruch 1 oder 2,
wobei die Poren-Strukturen Gitter (2) sind.

4. Verfahren gemäß einem der vorangehenden Ansprüche,
wobei die Pasten (7a, 7b) mittels Düsen (8) aufgebracht werden.

5. Verfahren gemäß einem der vorangehenden Ansprüche,
wobei nach dem Aufbringen der Pasten (7a, 7b) die gebildeten Oberflächen davon eingeebnet werden.

6. Verfahren gemäß einem der vorangehenden Ansprüche,
wobei das Verfahren mittels eines kontinuierlichen Vorgangs durchgeführt wird.

7. Verfahren gemäß einem der vorangehenden Ansprüche,
wobei die Pasten (7a, 7b) bei 40-80 °C während 6-24 Stunden ausgehärtet werden.

8. Verfahren zum Herstellen einer bipolaren Batterie (12), aufweisend das Verfahren zum Herstellen einer bipolaren Zelle (10) gemäß einem der vorangehenden Ansprüche,
wobei eine Mehrzahl von gebildeten bipolaren Zellen (10) aufeinander gestapelt werden,
wobei eine Trennschicht (11) zum Absorbieren von Elektrolyt zwischen benachbarten bipolaren Zellen (10) eingeschoben wird.

9. Verfahren gemäß Anspruch 8, abhängig von Anspruch 7,
wobei das Aushärten nach dem Stapeln, vorzugsweise nach Erhöhen der Kompressionskraft der Batterie (12) erfolgt.

## Revendications

1. Procédé pour fabriquer une pile bipolaire (10) pour une batterie au plomb - acide bipolaire (12) en fournissant une plaque bipolaire (1), dans lequel un matériau actif positif et un matériau actif négatif sont appliqués sur leurs côtés opposés sensiblement simultanément, **caractérisé en ce que** la plaque bipolaire (1) comprend des structures poreuses (2) au niveau de ses côtés opposés, dans lequel des pâtes (7a, 7b) d'un matériau actif positif et d'un matériau actif négatif sont appliquées dans des cavités des structures poreuses (2) respectives, dans lequel les pâtes (7a, 7b) forment une couche continue sur la partie supérieure des structures poreuses (2) respectives, qui est plus fine que 20 % de l'épaisseur des structures poreuses (2).

2. Procédé selon la revendication 1, dans lequel les pâtes (7a, 7b) respectives sont appliquées sur la plaque bipolaire (1) à une pression élevée d'au moins 0,1 kg/cm², et de préférence d'au moins 0,3 kg/cm².

3. Procédé selon la revendication 1 ou 2, dans lequel les structures poreuses sont des grilles (2).

4. Procédé selon l'une des revendications précédentes, dans lequel les pâtes (7a, 7b) sont appliquées par des buses (8).

5. Procédé selon l'une des revendications précédentes, dans lequel après avoir appliqué les pâtes (7a, 7b), ses surfaces résultantes sont nivelées.

6. Procédé selon l'une des revendications précédentes, dans lequel le procédé est réalisé au moyen d'un processus continu.

7. Procédé selon l'une des revendications précédentes, dans lequel les pâtes (7a, 7b) sont durcies à 40 - 80 °C pendant 6-24 heures.

8. Procédé pour fabriquer une batterie bipolaire (12), comprenant le procédé pour fabriquer une pile bipolaire (10) selon l'une quelconque des revendications précédentes, dans lequel une pluralité de piles bipolaires (10) résultantes sont empilées les unes sur les autres, dans lequel un séparateur (11) pour absorber l'électrolyte est pris en sandwich entre des piles bipolaires (10) adjacentes.

9. Procédé selon la revendication 8, dépendant de la revendication 7, dans lequel le durcissement a lieu après l'empilement, de préférence après l'augmentation de la force de compression de la batterie (12).
